# EUROPEAN PATENT SPECIFICATION

(11) **EP 0 337 143 B1**
(45) Date of publication and mention of the grant of the patent: **02.06.1993**
(21) Application number: 89104635.1
(22) Date of filing: 15.03.1989
(51) Int. Cl.: B01D 53/36

(54) **A method of catalytic combustion of organic compounds and a catalytic burner for combustion of organic compounds**
Methode zur katalytischen Verbrennung von organischen Verbindungen und ein katalytischer Brenner zur Verbrennung von organischen Verbindungen
Mèthode de combustion catalytique de composés organiques et brûleur catalytique pour la combustion de composés organiques

(30) Priority: 24.03.1988 PL 271405; 24.03.1988 PL 271406
(43) Date of publication of application: 18.10.1989
(73) Proprietor: POLSKA AKADEMIA NAUK INSTYTUT KATALIZY I FIZYKOCHEMII POWIERZCHNI, 30-239 Krakow (PL)
(72) Inventor: Wojciechowski, Jerzy, PL-31-072 Kraków (PL); Janas, Janusz, PL-31-276 Kraków (PL); Wysocki, Zygmunt, PL-31-214 Kraków (PL); Rachwal, Andrzej, PL-30-142 Kraków (PL)
(74) Representative: Finck, Dieter, Dr.Ing.

(56) References cited:
- DE-A- 1 442 904
- FR-A- 2 347 088
- US-A- 2 946 651

## Description

The subject of the invention is a method of catalytic combustion of gases and vapours, especially organic ones, mixed with air or other gas containing oxygen, and a catalytic burner for combustion of organic compounds.

Environmental protection and power demands of the modern world require such combustion processes in which combustion products do not pollute the natural environment and in which, at the same time, the combustion process efficiency is high.

It is particularly important that combustion gases do not contain nitric oxides which cause so-called acid rains destructive for nature.

Combustion processes have always been difficult for man to control and have remained such to the present day.

Difficulties in combustion of fuels result from the necessity to control the air-to-fuel ratio. Processes of complete combustion take place only at a certain definite ratio of both the aforesaid components.

At a flame combustion of fuels combustion gases always contain nitric oxides which have a destructive effect both on man and nature as well as on material culture.

A significant advance in the development of oxidation processes has been the utilization of heterogeneous catalysis. Processes of fuel oxidation on the surface of catalysts proceed within a very wide range and do not yield nitric oxides.

Processes of catalytic oxidation of organic compounds have been successfully applied in technologies of cleaning of waste gases from undesirable impurities.

In a typical process of catalytic oxidation of organic compounds air together with organic matters are heated to the initiation temperature of the combustion reaction of organic matters and are introduced on the bed of the catalyst applied.

In the catalyst bed the organic matters are oxygenated. This causes a temperature rise. Air together with combustion products leave the catalyst bed, their temperature being higher than at the inlet.

Technologies of catalytic after-burning of gases are applied usually for cleaning of gases from needless impurities, the concentration of which in the air is usually low. To improve economics of the process diaphragm heat exchangers are usually applied, which enable utilization of about 50% of heat of hot combustion gases for heating of air supplied to a reactor.

Basic and patent literature on processes and apparate for catalytic gas cleaning according to the aforesaid scheme is very rich and therefore detailed specifications are not presented herein.

A considerable advance in the field of catalytic gas cleaning are reversion processes consisting in cyclic changing of the direction of an air stream flowing through the bed and, if necessary, in placing the catalyst bed between two layers of a ceramic packing and supplying of heat to the middle part of the catalyst bed. In the reversion method heat of hot waste gases is utilized owing to heat regenerators which are: a part of the catalyst bed and layers of the ceramic packing.

An example of a reversion catalytic process, in which gases pass through a catalyst bed in a cyclically changing direction, is the U.S.S.R. invention no. 865796 /1981/. The invention was applied for oxidation of SO₂ to SO₃.

Cycles of the gas flow in one direction last from a dozen or so to several dozen minutes. The process is inasmuch uneconomical as it requires a much bigger amount of the catalyst.

An example of a reversion process of after-burning of gases from organic impurities is presented in the U.S.A. patent specification no. 2,946,651 /1960/. According to that invention a catalyst bed is placed between two layers of a ceramic packing.

At the start the catalyst bed is heated by means of hot combustion gases and then air contaminated with compounds subject to catalytic conversion is let pass therethrough. The process proceeds autothermally, if the concentration of impurities exceeds a certain low level. Cycles of letting the air pass in one direction last several dozen seconds.

An example of another reversion process, in which the catalyst bed is placed between two layers of a ceramic packing, and heat is supplied to the middle part of the catalyst bed is the process described in the Polish patent specification no. 126861.

The process of gas cleaning from undesirable impurities proceeds there at continuous or periodic heat supply to the middle part of the catalyst bed.

The temperature of the catalyst bed, according to the above-mentioned invention, is controlled both by the frequency of changing the direction of the gas flow through a reactor and by the amount of heat supplied from the outside to the middle part of the catalyst bed.

Reversion processes are very useful for cleaning of gases with relatively low concentrations of impurities. They proceed autothermally when the concentration of impurities is contained in the range of from 1 to 5 g per 1 m³ of air being cleaned.

At higher concentrations there is a hazard of overheating the catalyst bed or elements of the apparatus. Though there are methods of cooling the catalyst bed, e.g. by bleeding a part of hot combustion gases from the middle of the catalyst bed, as described in the Polish patent specification no. 137515, yet, practice has shown that when air contains considerable concentrations of impurities, and periodically the said concentration increases to a high value, then bleeding of a part of gases is not sufficient and the catalyst bed hazardously overheats, even to a temperature of more than 1000°C, and, besides, bleeding gases are not always completely cleaned. This abates the efficiency of the catalyst.

A drawback of reversion methods is that during a change of the direction of gas flowing through the reactor a part of gas present in the reactor is not cleaned. When the concentration of impurities is not high, and changes of the gas flow direction are not frequent, this phenomenon does not affect significantly the degree of gas cleaning. But for high concentrations this phenomenonis disadvantageous.

To eliminate the above-mentioned drawback various methods are applied. In the U.S.A. patent specification no. 3,870,474 /1975/ it is recommended to apply in such cases, among other things, several reaction members which, engaged in work at an appropriate moment, clean from impurities those gas volumes which have not been cleaned in the course of the operation of the gas direction change. This is, however, an expensive preventive method.

Those skilled in the art know catalytic reactors which are applied in processes of catalytic gas cleaning. A new generation of apparata of this type is based on making use of the method of catalytic gas cleaning, described in the Polish patent specification no. 126861. According to the said method the process of catalytic gas cleaning is carried out by means of the reversion method; the catalyst of the oxidation process is placed between two layers of a packing accumulating heat, while heat necessary to heat the catalyst and, eventually, to support the after-burning process, is supplied to the middle part of the catalyst bed.

An apparatus according to the Polish patent specification no. 129862 consists of two identical cylindrical reactors, whereof each has two chambers - the first one is a catalytic chamber provided with two concentric cylindrical perforated gauzes closed from below by a bottom and forming a basket containing the catalyst bed, and - the other, lower one, is a recuperation chamber, inside which there is a layer of a ceramic packing.

Both reactors are connected with each other from below by means of a collector feeding contaminated gas in a cyclic reversion manner now to one and now to the other reactor. At the same time cleaned air is taken off from the opposite reactor. The gas flow is changed by means of control valves with adjustable operation time.

The reactors are connected with each other from above by means of a common collector provided with a stub pipe feeding hot combustion gases necessary to heat the catalyst to the initiation temperature of the after-burning reaction of impurities. Alternatively, instead of hot combustion gases, the catalyst layer may be heated by means of electric heating elements introduced to the central, empty part of the catalytic basket, called a heating chamber.

According to the Polish patent specification no. 129863 the process of catalytic gas cleaning is carried out in a reversion reactor in a form of a cylindrical body, inside which three perforated cylinders of different diameters are centrically mounted.

In the space formed by two external cylinders there is a bed of an appropriate catalyst. A ring of perforated steel sheet, fastened in the middle of perforated cylinders, divides the reactor into two chambers, the said partition not reaching accurately the internal perforated ring. The space limited by the internal cylinder is a heating chamber inside which electric heaters are placed.

Contaminated gases are directed by means of controlled reversion valves - either to the upper part of the apparatus, passing then through the upper chamber with a ceramic packing, the upper catalytic chamber, the heating chamber, the lower catalytic chamber, the lower chamber with a ceramic packing, and leave the reactor in its lower part - or to the lower part of the apparatus, passing through particular elements thereof in the direction opposite than before.

Another, simpler design is described in the Polish patent specification no. 143 752. An apparatus for catalytic cleaning of waste gases is made in that case in a form of one compact reactor with a cylindrical housing - functioning, however, as two reactors.

The interior of the apparatus from the bottom is divided by means of a vertical partition tightly abutting the internal walls of the reactor, not reaching, however, the upper cover of the reactor, into two identical compartments connected in their upper part by means of a common heating chamber.

A series of symmetrical, horizontally arranged perforated sheets divides both compartments into particular chambers. Between two lower perforated partitions there is a ceramic packing layer, and over it there is a catalyst layer limited from above by a successive perforated sheet.

The upper part of the cylinder is closed by a cover provided with a stub pipe to bleed hot gases. In the lower part of the reactor, below the level of the lowest perforated partition, there are inlet-outlet stub pipes - one in each, on each side of the vertical partition - to feed contaminated gases forced by a fan, through a control valve. Through one of the stub pipes gases enter the lower part of the corresponding half of the reactor, pass through the lower porforated partition, the ceramic packing layer, the middle perforated partition, the layer of the catalyst, the upper perforated partition, the heating chamber, and enter from above the other, symmetrical half of the reactor, passing through particular layers in the reverse direction and, when cleaned - they leave the reactor through the other stub pipe.

On lapse of a definite period of time, the duration of which depends, among other things, on the concentration of impurities, the reversion valve changes the direction of air flowing through the reactor.

Such a method of carrying out the process of cleaning the waste gases from combustible impurities, characteristic of reversion methods, is energy-saving and enables effective after-burning of impurities within a wide range of concentrations - usually 0.1 - 3 g of impurities in 1 m³ of air.

Within the range of low concentrations of impurities the temperature of the reactor can be maintained at a constant level, and a periodic temperature rise - caused by a sudden short-duration increase of the concentration of combustible components - can be easily controlled /e.g. by the application of bleeding of hot gases, as in the Polish patent no. 137 515/.

However, when the concentration of organic compounds in waste gases considerably exceeds the boundary value, for example, the value of 10 g/m³, the reversion catalytic reactors work unstably and are very difficult to control. A hazard of overheating arises, what may entail deactivation of the catalyst or even the destruction of internal elements of the reactor.

Power demands often require combustion of gaseous or liquid hydrocarbons in an air stream, but at temperatures lower than in flame burners, to avoid production of nitric oxides and to reduce heat losses.

The problem underlying the invention is to provide a method of catalytic compounds and a catalytic burner which make it possible to carry out catalytic combustion of organic compounds in an air stream, at a wide range of the flow intensity of a mixture of gases flowing through a reactor, within a wide range of concentrations of organic compounds and temperatures of the reaction mixture, with a possibility to batch gaseous or liquid fuels to a stream of gases.

This problem is solved by the method of claim 1 and the catalytic burner according to claim 5. Preferred methods are included in claims 2 to 4 whereas a preferred embodiment of the catalytic burner is included in claim 6.

With the method and the catalytic burner of the invention, combustion gases of a required temperature for their possible energetic utilization can be obtained, without nitric oxides produced in the result of a direct reaction of oxygen with atmospheric oxygen.

The design of a reversion catalytic reactor according to the present invention enables stable combustion of organic compounds in air at a high, and even very high concentration of the said compounds.

A method of catalytic combustion of organic compounds, in which air containing combustible compounds circulates between two layers of a catalyst and two layers of a ceramic packing, functioning as heat regenerators, and the direction of circulating gases changes periodically to the reverse one, consists according to the invention in that a stream of gas is taken off from the middle of this system through the third layer of the catalyst to the outside. Owing to this a possibility of stable oxidation of fuel is attained, even at a very high concentration thereof, near to the lower explosion limit, at a wide range of air intensity.

Owing to that the source of heat for initiation of the combustion process is located in the space between three layers of the catalyst, the burning reaction can be quickly initiated or maintained when the concentration of organic compounds periodically decresses.

This method enables both cleaning of waste gases having high or periodically high concentration of combustible compounds as well as achieving possibly stable composition of the gaseous fuel introduced on purpose to air for energetistic utilization.

A catalytic burner according to the invention is characterized by that it is in a form of a metal cylinder, inside which there are two catalytic-regenerative chambers, and in its upper part, on the cover thereof, a cylinder is mounted, inside which a third bed of the catalyst applied in processes of catalytic gas cleaning is placed.

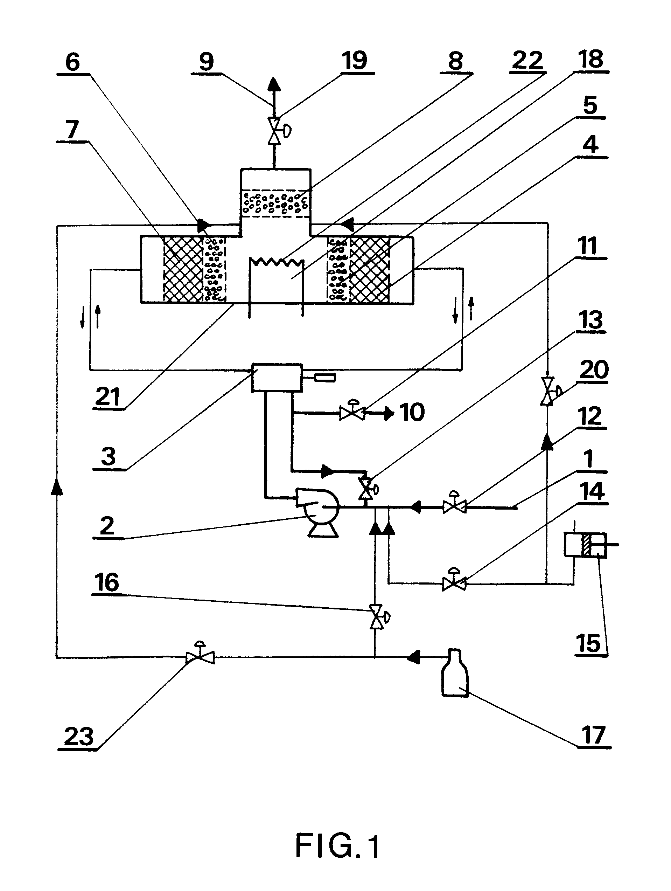

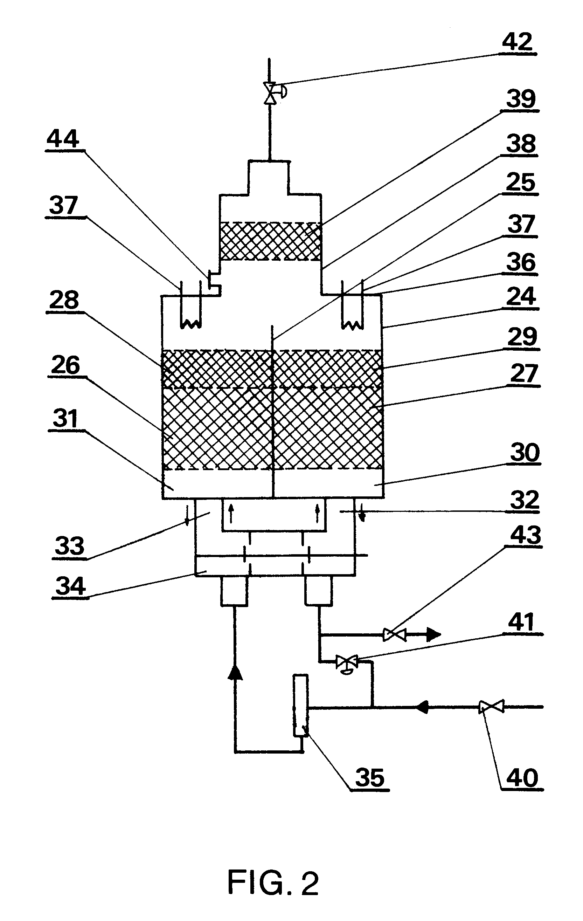

A catalytic burner according to the invention, is presented in an example of its embodiment in a drawing, in which Fig. 1 presents the burner with a horizontal system of catalytic- regenerative chambers, and Fig. 2 presents the burner with a vertical system of catalytic-regenerative chambers.

In Fig. 1 air together with combustible gases or vapour are fed by means of a conduit 1 through a control valve 12 and is forced by a fan 2 to a reversion valve 3. The said valve directs the mixture of air with organic components to a metal cylinder 21 cyclically, in alternate directions. The mixture is directed through a layer of a ceramic packing 4, a catalyst bed 5, where the reaction takes place, and a chamber 18.

In the chamber 18 the stream of gas is divided, a part of the mixture returns through a catalyst bed 6, a layer of a ceramic packing 7 and through the reversion valve 3, a control valve 13, to the fan 2, joining the stream of fresh air. The other part of the stream of gas from the chamber 18 is directed through a catalyst bed 8, a control valve 19 and a conduit 9 to the outside of the system, where it can be utilized in conventional heat exchangers.

When the reversion valve 3 changes its position, the mixture of gases passes through the reactor in the reverse direction, i.e. through the layer of the packing 7, the catalyst bed 6, the chamber 18, wherefrom a part of gases is directed back through the catalyst bed 5 and the ceramic packing 4, while the other part of gas from the chamber 18 is directed to the outside through the layer of the catalyst 8 and the control valve 19, for heat utilization by means of conventional methods.

The chamber 18 is provided with a heat source necessary for heating the catalyst bed during start or for maintenance of an appropriate temperature, when the calorific value of gas being cleaned is too low to maintain the reaction within the autothermal range. A preferable heat source are electric heaters 22.

The aforesaid combustion scheme can be applied when the gaseous mixture contains combustible compounds of a high temperature.

This scheme can be also applied for combustion of fuel batched on purpose to the air stream in order to obtain hot combustion gases for various energy receivers.

In such a case to a stream of gas a combustible gas is batched, for example, from a cylinder 17, its intensity being controlled by a valve 16 and said gas being fed into the air stream before the reactor and/or through a valve 23 to the chamber 18 before the catalyst bed 8.

As fuel also liquid fuel can be applied, being pumped over to the system by a metering pump 15 through a valve 14 and/or a valve 20. In both cases the temperature of coming out combustion gases can be easily controlled by the amount of fed fuel up to about 1500°C, without any worry that nitric oxides would be produced.

When the temperature of the bed decreases, then it can be controlled - as it has been already explained - by means of the heater 22 or by the amount of batched fuel; it can be also controlled by letting out a part of or all gases through the conduit 10 and control of the intensity of this stream by means of the valve 11, the valve 19 being at the same time partially or totally closed. This is particularly useful when the stream of gases contains variable concentrations of combustible compounds and the intensity of the air stream is variable as well.

The catalytic burner presented in Fig. 2 consists of a metal cylinder 24 divided inside by a vertical partition 25 into two symmetrical parts. the said partition delimits two identical catalytic-regenerative chambers 30 and 31 in which there are ceramic packing layers 26 and 27 in a form of spheres, rings, grids or others, as well as layers of a catalyst applied in after-burning processes of gases 28 and 29. In the lower part of chambers 30 and 31 there are stub pipes 32 and 33 connecting the particular chambers with a reversion valve 34 which directs the stream of gases forced by a fan 35 cyclically to the catalytic-regenerative chamber 30 or 31.

On the cover of a reactor 36 there are electric heaters 37 and a cylinder 38 of the diameter smaller than that of the cylinder 24. Inside the smaller cylinder 38 there is the bed of a catalyst 39 applied in gas cleaning processes, placed on a perforated plate.

A valve 40 controls the flow of air supplied from the outside, a valve 41 controls the flow of gases circulating through catalytic-regenerative chambers, and valves 42 and 43 control the flow intensity of the stream of gases passing through the catalyst bed 39.

A stub pipe 44 enables directing the air stream of a very high concentration of combustible components or even pure fuel under the catalyst bed 39, in the case when its temperature is sufficient for the catalytic combustion process to take place.

The presented method of combustion of organic compounds contained in gases, irrespective of the fact whether the organic compounds are impurities and should be removed before emission to the atmosphere or the said compounds are added on purpose as fuel to the air stream for energitistic purposes, is a great advance in relation to the known combustion methods. In relation to the flame- or thermal method the method according to the invention enables burning without production of nitrogen compounds in a form of oxides.

In relation to the known methods of catalytic after-burning of gases, the method according to the invention enables stable burning of organic compounds within a wide range of concentrations - as far as to concentrations near the lower explosion limit - without the necessity of applying expensive diaphragm heat exchangers.

In relation to the reversion methods of catalytic after-burning of gases, the method according to the invention enables carrying out the after-burning process without the hazard of uncontrolled overheating of the catalyst bed, and eliminaters release of uncleaned gas during cyclic changes of the flow direction of gas.

The process according to the invention has been tested in practice in several prototype installations designed for after-burning of waste gases having relatively high concentrations of substances subject to combustion.

Example I. In the installation hexane contained in air in the amount of 10 g per m³ was after-burnt. The temperature of the gaseous mixture was 150°C. The prototype reactor was in a form of a cylinder of the diameter of 50 cm, to the middle part of which a second cylinder, also of the diameter of 50 cm, was welded to at a straight angle. Layers of the catalyst and of the packing were arranged in the cylinders according to the diagram shown in Fig. 1.

The applied catalyst was an industrial platinic catalyst used in processes of catalytic after-burning of gases. The catalyst was in a spherical form and had the diameter of 5 mm.

All three layers thereof, denoted 5, 6 and 8 in the diagram, were 12 cm high. The ceramic packing, denoted 4 and 7 in the diagram, were ceramic rings having the diameter of 15 mm.

Through the reactor 300 m³/h of the gaseous mixture was let pass. Start of the installation was enabled by 4 kW electric heaters 22.

The temperature of the gaseous mixture coming out from the reactor through the conduit 9 was from 430 to 460°C, the conversion degree of hexane being above 99%.

Example II. The prototype of the design as above after-burnt methanol contained in air with the flow intensity of 40 m³ per hour; the pump 15 fed methanol in the amount of 800 ml/hr through the valve 14 and 1500 ml/hr through the valve 20.

The combustion process of methanol proceeded in 99.9%. The temperature of eombustion gases at the outlet 9 was 675°C.

No presence of nitric oxides was found in combustion gases.

Example III. The catalytic burner according to the invention was tested in practice for combustion of organic solvents vapour contained in air. The air stream intensity was 200 m³/hr.

The concentration of organic solvents, mainly methanol and acetone, varied within the range of from 5 to 25 g/m³. The apparatus enabled combustion of organic vapour with the efficiency of more than 99%. No presence of nitric oxides was found in combustion products.

The catalytic burner according to the invention enables carrying out of the oxidation reaction of chemical compounds contained in air at relatively high concentration thereof, from several to several dozen grammes per 1 m³ of air. The combustion process proceeding in the burner according to the invention is stable, without any abrupt overheats or abrupt drops of the reaction rate.

The catalytic burner can be applied for cleaning of waste gases having a high concentration of impurities subject to catalytic conversion. It can be also applied for combustion of various organic compounds batched on purpose to the stream of air fed to the apparatus which functions then as a catalytic burner producing hot combustion gases.

## Claims

1. Method of catalytic combustion of compounds, especially organic ones in a form of gases or vapours mixed with air or other gases containing oxygen in which the involved gases are circulated through two layers of a ceramic packing functioning as heat regenerators and two layers of catalyst applied in processes of catalytic after-burning of gases, the layers being placed in such manner that circulating gases enter first a first ceramic packing layer, then in sequence a first and a second catalyst layer and finally a second ceramic packing layer, characterized in that part of circulating gases is taken off to the outside from the space formed between two layers of said catalyst through a third layer of the catalyst applied in catalytic after-burning of gases, appropriate temperature of the catalyst layers being controlled by means of electric heaters.

2. Method according to claim 1, characterized in that the said gases or vapours mixed with air or other gases containing oxygen are fed to the reactor by means of fan through a reversion valve.

3. Method according to claim 1 or 2, characterized in that the said gases or vapours mixed with air or other gases containing oxygen are additionally enriched with combustible components by means of either introductory mixing of unpurified gases with gaseous or liquid fuel or addition of said fuel to the stream of partially purified gases or vapours to the space formed by the three layers of catalysts and in that the amount of said fuel is regulated by means of metering pumps and valves.

4. Method according to one of the preceding claims, characterized in that when the concentration of impurities is too low so that on all catalyst layers the temperature at which the oxidation reaction proceeds at a sufficient rate cannot be maintained, then a part of the purified gases or vapours is bled through an outlet control valve and at the same time the flow is throttled by a conduit leading to the outside by means of another valve.

5. Catalytic burner for catalytic combustion of compounds, particularly organic ones, of relatively high concentration, in a stream of air or other gases which contain oxygen, characterized by a first cylinder (21, 24) comprising two regenerative-catalytic chambers (30, 31), each of the chambers (30, 31) containing a ceramic packing layer (4,7, 26, 27) and a catalyst layer (5, 6, 28, 29), a second cylinder (38) including a third catalyst layer (8, 39) and connected to the first cylinder (21, 24) such that a common space is formed by the three catalyst layers (5, 6, 28, 29, 8, 39), and an electric heater (22, 37) located in the common space, the first cylinder (21, 24) being connected by conduits (32, 33) and a reversion valve (3, 34) to a fan (2, 35) for sucking the mixture of air or other gases containing oxygen as well as combustible compounds, particulary organic ones, and conveying the mixture to the first cylinder (21, 24), the second cylinder (38) being connected by an outlet valve (19, 42) to the outside.

6. Catalytic burner according to claim 5, characterized in that the first cylinder (24) is vertically arranged and divided by a vertical partition wall (25) into two identical regenerative-catalytic chambers (30, 31) each containing the ceramic packing layer (26, 27) and the catalyst layer (28, 29), in that the conduits (32, 33) are connected to the lower parts of the chambers (30, 31), in that the heat source (37) and the second cylinder (38) are situated in the upper part of the first cylinder (24) above the catalyst layers (28, 29), in that outlet valves (42) and (43) are arranged to control the flow intensity of the stream of gases or vapours passing through the third catalyst layer (39), in that a valve (41) is provided for controlling the flow of gases circulating through the regenerative-catalytic chambers (30, 31), and in that an additional inlet (44) is arranged for the introduction of additional air which contains combustible impurities of a high concentration or gaseous fuels to the stream of partly purified gas flowing through the third catalyst layer (39).

## Patentansprüche

1. Verfahren zur katalytischen Verbrennung insbesondere organischer Verbindungen in Form von mit Luft oder anderen sauerstoffhaltigen Gasen vermischten Gasen oder Dämpfen, bei dem die beteiligten Gase durch zwei als Regeneratoren wirkende Schichten eines keramischen Füllmaterials und durch zwei in katalytischen Nachverbrennungsprozessen von Gasen angebrachte Katalysatorschichten zirkuliert werden, wobei die Schichten so angeordnet werden, daß zirkulierende Gase zuerst in eine erste keramische Füllmaterialschicht, dann der Reihe nach in eine erste und eine zweite Katalysatorschicht und schließlich in eine zweite keramische Füllmaterialschicht einströmen, dadurch gekennzeichnet, daß ein Teil der zirkulierenden Gase nach außen aus dem zwischen zwei Katalysatorschichten gebildeten Raum durch eine in einer katalytischen Nachverbrennung von Gasen angebrachte dritte Katalysatorschicht abgezogen und die geeignete Temperatur der Katalysatorschichten mittels elektrischer Heizeinrichtungen gesteuert wird.

2. Verfahren nach Anspruch 1, dadurch gekennzeichnet, daß die mit Luft oder anderen sauerstoffhaltigen Gasen vermischten Gase oder Dämpfe dem Reaktor mittels eines Gebläses durch ein Umkehrventil zugeführt werden.

3. Verfahren nach Anspruch 1 oder 2, dadurch gekennzeichnet, daß die mit Luft oder anderen sauerstoffhaltigen Gasen vermischten Gase oder Dämpfe zusätzlich mit brennbaren Komponenten angereichert werden, indem entweder durch Einleitung ungereinigte Gase mit gasförmigem oder flüssigem Brennstoff vermischt werden oder der Brennstoff dem Strom aus teilweise gereinigten Gasen oder Dämpfen in den von den drei Katalysatorschichten gebildeten Raum zugeführt wird, und daß die Menge des Brennstoffs mittels Dosierpumpen und Ventilen reguliert wird.

4. Verfahren nach einem der vorhergehenden Ansprüche, dadurch gekennzeichnet, daß dann, wenn die Konzentration von Verunreinigungen zu niedrig ist, so daß auf keiner Katalysatorschicht die Temperatur aufrechterhalten werden kann, bei der die Oxidationsreaktion mit ausreichender Geschwindigkeit fortschreitet, ein Teil der gereinigten Gase oder Dämpfe durch ein Auslaßsteuerventil abgelassen wird und gleichzeitig der Durchsatz durch eine Leitung gedrosselt wird, die mittels eines weiteren Ventils nach außen führt.

5. Katalytischer Brenner zur katalytischen Verbrennung insbesondere organischer, relativ hoch konzentrierter Verbindungen in einem Strom aus Luft oder anderen sauerstoffhaltigen Gasen, gekennzeichnet durch einen ersten Zylinder (21, 24) mit zwei Regenerativ-Katalysator-Kammern (30, 31), wobei jede der Kammern (30, 31) eine keramische Füllmaterialschicht (4, 7, 26, 27) und eine Katalysatorschicht (5, 6, 28, 29) enthält, durch einen zweiten Zylinder (38) mit einer dritten Katalysatorschicht (8, 39), der mit dem ersten Zylinder (21, 24) so verbunden ist, daß durch die drei Katalysatorschichten (5, 6, 28, 29, 8, 39) ein gemeinsamer Raum gebildet wird, und durch eine in dem gemeinsamen Raum befindliche elektrische Heizeinrichtung (22, 37), wobei der erste Zylinder (21, 24) durch Leitungen (32, 33) und ein Umkehrventil (3, 34) mit einem Gebläse (2, 35) zum Ansaugen der Mischung aus Luft oder anderen sauerstoffhaltigen Gasen sowie insbesondere organischen, brennbaren Verbindungen und zum Fördern der Mischung zu dem ersten Zylinder (21, 24) und der zweite Zylinder (38) durch ein Auslaßventil (19, 42) nach außen verbunden ist.

6. Katalytischer Brenner nach Anspruch 5, dadurch gekennzeichnet, daß der erste Zylinder (24) vertikal angeordnet und durch eine vertikale Trennwand (25) in zwei identische Regenerativ-Katalysator-Kammern (30, 31) geteilt ist, von denen jede die keramische Füllmaterialschicht (26, 27) und die Katalysatorschicht (28, 29) enthält, daß die Leitungen (32, 33) mit den unteren Teilen der Kammern (30, 31) verbunden sind, daß die Wärmequelle (37) und der zweite Zylinder (38) sich in dem oberen Teil des ersten Zylinders (24) über den Katalysatorschichten (28, 29) befinden, daß Auslaßventile (42) und (43) so angeordnet sind, daß sie den Durchsatzgrad des Stroms aus durch die dritte Katalysatorschicht (39) hindurchgehenden Gasen oder Dämpfen steuern, daß ein Ventil (41) zum Steuern des Durchsatzes von durch die Regenerativ-Katalysator-Kammern (30, 31) zirkulierenden Gasen vorgesehen ist und daß ein zusätzlicher Einlaß (44) für das Einführen von brennbare hochkonzentrierte Verunreinigungen oder gasförmige Brennstoffe enthaltender, zusätzlicher Luft zu dem durch die dritte Katalysatorschicht (39) fließenden Strom aus teilweise gereinigtem Gas angeordnet ist.

## Revendications

1. Méthode de combustion catalytique de composés, en particulier organiques sous forme de gaz ou vapeurs mélangés avec de l'air ou d'autres gaz contenant de l'oxygène dans laquelle on fait les gaz inclus circuler à travers de deux couches d'une matière de remplissage céramique fonctionnant comme régénérateurs et deux couches de catalyseur appliquées en procédés de post-combustion catalytique de gaz, les couches étant disposées de telle manière que des gaz circulants entrent premièrement une première couche d'une matière de remplissage céramique, puis par ordre une première et une seconde couche de catalyseur et finalement une seconde couche d'une matière de remplissage céramique, caractérisé en ce qu'une part des gaz circulants est departée vers l'extérieur de l'espace formé entre deux couches dudit catalyseur à travers d'une troisième couche du catalyseur appliquée en post-combustion catalytique de gaz, la température appropriée des couches de catalyseur étant contrôlée par des moyens de chauffage électriques.

2. Méthode selon la revendication 1, caractérisé en ce que lesdits gaz ou vapeurs mélangés avec de l'air ou d'autres gaz contenant de l'oxygène sont alimentés au réacteur au moyen d'une soufflante à travers d'une vanne de renversement.

3. Méthode selon la revendication 1 ou 2, caractérisé en ce que lesdits gaz ou vapeurs mélangés avec de l'air ou d'autres gaz contenant de l'oxygène sont additionellement enrichis avec des composants combustibles au moyen de soit mélange introductif de gaz non purifiés avec du carburant gazeux ou liquide, soit addition dudit carburant au courant de gaz ou vapeurs partiellement purifiés vers l'espace formé par les trois couches de catalyseurs et en ce que la quantité dudit carburant est régulée au moyen de pompes de dosage et de vannes.

4. Méthode selon l'une des revendications précédentes, caractérisé en ce que quand la concentration d'impuretés est trop faible ainsi que sur aucune couche de catalyseur la température à laquelle la réaction d'oxydation progresse à vitesse suffisante ne peut être maintenue, alors on fait une part des gaz ou vapeurs purifiés s'échapper à travers d'une vanne-pilote de sortie et en même temps le débit est étranglé par un conduit menant vers l'extérieur au moyen d'une autre vanne.

5. Brûleur catalytique pour combustion catalytique de composés, en particulier organiques, à concentration relativement haute, dans un courant d'air ou d'autres gaz qui contiennent de l'oxygène, caractérisé par un premier cylindre (21, 24) comprenant deux chambres régénératives-catalytiques (30, 31), chacune des chambres (30, 31) contenant une couche d'une matière de remplissage céramique (4, 7, 26, 27) et une couche de catalyseur (5, 6, 28, 29), un second cylindre (38) présentant une troisième couche de catalyseur (8, 39) et lié au premier cylindre (21, 24) de telle manière qu'un espace commun est formé par les trois couches de catalyseur (5, 6, 28, 29, 8, 39), et un moyen de chauffage électrique (22, 37) situé dans l'espace commun, le premier cylindre (21, 24) étant lié par des conduits (32, 33) et une vanne de renversement (3, 34) à une soufflante (2, 35) pour aspirer le mélange d'air et d'autres gaz contenant de l'oxygène ainsi que des composés combustibles, en particulier organiques, et convoyer le mélange au premier cylindre (21, 24), le second cylindre (38) étant lié par une vanne de sortie (19, 42) à l'extérieur.

6. Brûleur catalytique selon la revendication 5, caractérisé en ce que le premier cylindre (24) est arrangé verticalement et divisé par une paroi de séparation (25) verticale en deux chambres régénératives-catalytiques (30, 31) identiques, chacune contenant la couche de matière de remplissage céramique (26, 27) et la couche de catalyseur (28, 29), en ce que les conduits (32, 33) sont liés aux parties inférieures des chambres (30, 31), en ce que la source de chaleur (37) et le second cylindre (38) sont situés dans la partie supérieure du premier cylindre (24) au-dessus des couches de catalyseur (28, 29), en ce que des vannes de sortie (42) et (43) sont disposées à contrôler l'intensité de débit du courant de gaz ou vapeurs passant par la troisième couche de catalyseur (39), en ce qu'une vanne (41) est prévue pour contrôler le courant de gaz circulant à travers les chambres régénératives-catalytiques (30, 31), et en ce qu'une entrée (44) additionelle est disposée pour l'introduction de l'air additionel qui contient des impuretés combustibles à haute concentration ou carburants gazeux dans le courant de gaz partiellement purifié passant par le troisième couche de catalyseur (39).
